# EUROPÄISCHE PATENTSCHRIFT

(11) **EP 3 371 025 B1**
(45) Veröffentlichungstag und Bekanntmachung des Hinweises auf die Patenterteilung: **11.12.2019**
(21) Anmeldenummer: 16793741.6
(22) Anmeldetag: 10.10.2016
(51) Int. Cl.: B60W 40/04, B60W 50/06, B60W 50/00, B60W 50/04

(54) **VORRICHTUNG ZUR UMFELDMODELLIERUNG FÜR EIN FAHRERASSISTENZSYSTEM FÜR EIN KRAFTFAHRZEUG**
SURROUNDINGS MODELING DEVICE FOR A DRIVER ASSISTANCE SYSTEM FOR A MOTOR VEHICLE
DISPOSITIF DE MODÉLISATION D'ENVIRONNEMENT POUR UN SYSTÈME D'AIDE À LA CONDUITE POUR UN VÉHICULE AUTOMOBILE

(30) Priorität: 03.11.2015 DE 102015221481
(43) Veröffentlichungstag der Anmeldung: 12.09.2018
(73) Patentinhaber: Continental Teves AG & Co. OHG, 60488 Frankfurt am Main (DE)
(72) Erfinder: GREWE, Ralph, 65933 Frankfurt am Main (DE); SCHAACK, Steffen, 63776 Mömbris (DE); LÜKE, Stefan, 61191 Rosbach vor der Höhe (DE)
(86) Internationale Anmeldenummer: PCT/DE2016/200468
(87) Internationale Veröffentlichungsnummer: WO 2017/076405

(56) Entgegenhaltungen:
- DE-A1-102013 101 079
- DE-A1-102013 207 905
- DE-U1-202008 016 892

## Beschreibung

### Technisches Gebiet

Die vorliegende Erfindung betrifft Fahrerassistenzsysteme für Kraftfahrzeuge.

Insbesondere betrifft die vorliegende Erfindung eine Vorrichtung und ein Verfahren zur Umfeldmodellierung für ein Fahrerassistenzsystem für ein Kraftfahrzeug.

### Technischer Hintergrund

Bei Echtzeitsystemen wird zwischen "harten" und "weichen" Echtzeitsystemen unterschieden. Harte Echtzeitsysteme garantieren und liefern ein korrektes Ergebnis innerhalb einer vorgegebenen, maximalen Antwortzeit.

Dies führt zu hohen Anforderungen bezüglich der Echtzeitfähigkeit an die Basis des Systems, beispielsweise an das Betriebssystem.

Es ist beispielsweise der Einsatz spezieller EchtzeitBetriebssysteme erforderlich, bekannte Vertreter sind z.B. OSEK, abgekürzt für "Offene Systeme und deren Schnittstellen für die Elektronik im Kraftfahrzeug", bzw. OSEK-OS ist eine vom OSEK-Konsortium verabschiedete Spezifikation für Echtzeitbetriebssysteme für eingebettete Systeme.

Ferner kann als Echtzeit-Betriebssystem auch QNX - ein proprietäres POSIX-fähiges unixoides Echtzeitbetriebssystem - oder vxWorks verwendet werden - ebenfalls ein Echtzeitfähiges Betriebssystem.

Im Gegensatz dazu erreicht ein weiches Echtzeitsystem im Mittel eine akzeptable Antwortzeit, kann diese jedoch nicht für jeden Fall garantieren. Das führt jedoch auch zu deutlich reduzierten Anforderungen an das Betriebssystem und macht den Einsatz von weit verbreiteten Systemen wir Linux oder sogar Windows möglich.

Gegenüber den harten Echtzeit-Betriebssystemen bieten weiche Echtzeitsysteme in der Regel umfangreichere API's und z.B. bessere Unterstützung von Bibliotheken oder Abstraktionsstandards wie z.B. OpenCV, Eigen, OpenGL, OpenCL.

Dies ermöglicht eine effizientere und schnellere Entwicklung von Algorithmen und Framework-Software und wird heute z.B. in Forschungs-Projekten für Rapid Prototyping verwendet.

Fahrerassistenzsysteme, abgekürzt FAS, von englisch "Advanced Driver Assistance Systems", abgekürzt ADAS, sind elektronische Zusatzeinrichtungen in Kraftfahrzeugen zur Unterstützung des Fahrers in bestimmten Fahrsituationen.

Heutige ADAS-Systeme sind in der Regel als harte Echtzeitsysteme ausgelegt. Bei der Auslegung von Systemen wie z.B. einem Notbremsassistent ist dies erforderlich, um garantieren, dass noch rechtzeitig, d.h. innerhalb der Systemgrenzen, auf eintretende Veränderungen der Fahrsituation regiert werden kann.

So zeigt die Druckschrift DE102013101079A1 bereits ein Verfahren für eine Steuereinheit für ein Fahrzeug wobei die Steuereinheit die Bearbeitung einer Mehrzahl von Prozessen basierend auf Sensordaten steuert. Hierbei wird unter anderem eine Situationsanalyse anhand der Sensordaten durchgeführt und in Abhängigkeit von einem Ergebnis der Situationsanalyse eine Priorisierung der Prozesse durchgeführt.

### Zusammenfassung der Erfindung

Es ist eine Aufgabe der vorliegenden Erfindung, eine verbesserte Vorrichtung zur Umfeldmodellierung für ein Fahrerassistenzsystem für ein Kraftfahrzeug bereitzustellen.

Diese Aufgabe wird durch die Gegenstände der unabhängigen Patentansprüche gelöst. Ausführungsformen und Weiterbildungen sind den abhängigen Patentansprüchen, der Beschreibung und den Figuren der Zeichnungen zu entnehmen.

Ein erster Aspekt der vorliegenden Erfindung betrifft eine Vorrichtung zur Umfeldmodellierung für ein Fahrerassistenzsystem für ein Kraftfahrzeug, wobei die Vorrichtung eine Separierungseinrichtung umfasst, welche dazu ausgebildet ist, eine Aufteilung eines zu berechnenden Gesamt-Fahrzeugumfeldmodells in ein statisches Fahrzeugumfeldmodell basierend auf einer ersten Vorrausschauweite und in ein dynamisches Fahrzeugumfeldmodell basierend auf einer zweiten Vorrausschauweite bereitzustellen.

Die Vorrichtung umfasst ferner eine erste Echtzeitrechnereinrichtung, welche dazu ausgebildet ist, das dynamische Fahrzeugumfeldmodell basierend auf der ersten Vorrausschauweite innerhalb einer maximalen Antwortzeit zu berechnen.

Die Vorrichtung umfasst ferner eine zweite Echtzeitrechnereinrichtung, welche dazu ausgebildet ist, das statische Fahrzeugumfeldmodell basierend auf der zweiten Vorrausschauweite mit einer charakteristischen Antwortzeit zu berechnen.

Ferner umfasst die Vorrichtung eine Situationsanalyseeinrichtung, welche dazu ausgebildet ist, die Aufteilung basierend auf einer Analyse des Gesamt-Fahrzeugumfeldmodells abzuändern.

Mit anderen Worten ausgedrückt, es wird in vorteilhafter Weise erreicht, den für die Redundanz erforderlichen Sicherheits- und Hauptpfad und die entsprechenden Funktionsausprägungen so aufzuteilen, dass die Echtzeit-Anforderungen an große Teile des Umfeldmodells sowie die Trajektorienplanung soweit reduziert werden, dass sie auch den Einsatz eines Systems mit weichen Echtzeit-Anforderungen ermöglichen.

Weiche Echtzeit-Anforderungen werden beispielsweise durch charakteristische Antwortzeiten beschrieben, die mit vorgegebenen Abweichungen überschritten werden können, harte Echtzeit-Anforderungen werden beispielsweise durch maximale Antwortzeiten beschrieben, die einzuhalten sind.

Die vorliegende Erfindung ermöglicht vorteilhaft, dass ein Teil des Fahrzeugumfeldmodells nicht hart echtzeitfähig berechnet werden muss und trotzdem eine garantierte Reaktionszeit des Systems sicher gestellt werden kann.

Die vorliegende Erfindung ermöglicht vorteilhaft, dass eine Situationsanalyse verwendet wird, die den nicht hart echtzeitfähigen Teil überwacht und bei Bedarf korrigiert, um eine garantierte Reaktionszeit auch in kritischen Situationen sicher zu stellen.

Mit anderen Worten ausgedrückt, es wird in vorteilhafter Weise beispielsweise erreicht, ein Verfahren zur Verarbeitung und Korrektur von Daten aus mit niedriger Frequenz laufenden Umfelderfassungs- und Verarbeitungsalgorithmen bereitzustellen ohne garantierte maximale Antwortzeit in zumindest einem (hoch)-dynamischen Umfelderfassungs-, Situationsanalyse- und Regelungsteil.

Dies ermöglicht vorteilhaft, eine hohe Frequenz und eine garantierte Antwortzeit des Gesamtsystems auch bei verzögerter Verarbeitung von Daten im niederfrequenten Verarbeitungsteil sicher zu stellen.

Der Begriff "niedrige Frequenz" wie von der vorliegenden Erfindung verwendet, wird dabei auf das Kriterium der nicht garantierten Antwortzeit bezogen, d.h. es kommt zu zyklischen Schwankungen beim Bereitstellen der Ergebnisse.

Es ist dabei von der vorliegenden Erfindung nicht unbedingt eine absolut "niedrige Frequenz" gemeint, allerdings haben nicht hart echtzeitfähige Systeme eine typische untere Grenze, unter der die Reaktionszeit mehr von "Systemeffekten" statt der Algorithmus-Laufzeit bestimmt wird.

Bei Windows-Systemen ist das typischerweise eine Zeit von beispielsweise 10 ms, woraus sich eine maximale deterministische "Regelfrequenz" von beispielsweise weniger als 100 Hz ergibt, ohne Sicherheitsfaktor. Bei Linux-Systemen liegt diese von der vorliegenden Erfindung als niedrig bezeichnete Frequenz typischerweise etwas höher, etwa beispielsweise 200 Hz.

Der Begriff "hohe Frequenz" wie von der vorliegenden Erfindung verwendet, bezeichnet beispielsweise eine Frequenz von mehr als 500 Hz.

Die vorliegende Erfindung ermöglicht beispielsweise vorteilhaft, dass insbesondere Ressourcen- und Entwicklungsaufwändige Algorithmen zur Erfassung des statischen Umfelds und zur Pfadplanung quer mit einer hohen Reichweite im niederfrequenten Teil ablaufen können.

Diese Verschiebung in den niederfrequenten Teil wird beispielsweise ermöglicht, da sich das statische Umfeldmodell in den typischen Zeiträumen bzw. Zeitspannen nicht ändert und so aus Systemsicht keine "dynamische" Reaktion darauf erforderlich ist.

Im Gegensatz hierzu ist im hochfrequenten Teil bei Algorithmen, die das dynamische Fahrzeugumfeld erfassen, wie z.B. ein Tracking von bewegten Objekten, eine Fußgängererkennung oder eine Ampelerkennung, eine garantierte maximale Antwortzeit einzuhalten, z.B. um die Erfassung der Notwendigkeit einer Notbremsung des Vorausfahrzeugs zu garantieren.

Eine Situationsanalyse und die Regelung laufen beispielsweise im hochfrequenten Teil, wobei im Normalfall die Trajektorie quer aus dem niederfrequenten Teil abgefahren wird, wobei die Längsführung aber beispielsweise komplett im hochfrequenten Teil ausgeführt wird unter Berücksichtigung der Daten aus dem statischen Umfeldmodell mit hoher Vorausschauweite, wobei durch diese Anordnung eine garantierte maximale Antwortzeit des Systems auf dynamische Verkehrsteilnehmer gegeben ist. Dies kann beispielsweise bei einem plötzlichen Einscherer oder bei einer Notbremsung erfolgen. Bei einer vorteilhaften Ausnutzung des statischen Umfeldmodells kann entschieden werden, ob ein Notbremsen und/oder ein Notausweichen durchgeführt werden sollte.

Es wird dabei beispielsweise keine Berechnung des Umfeldmodells durchgeführt, sondern es wird beispielsweise der letzte Datensatz aus dem niederfrequenten Teil, also z.B. Spurverlauf oder Randbebauung, während der Analyse mit berücksichtigt.

Die vorliegende Erfindung ermöglicht beispielsweise vorteilhaft, dass die Situationsanalyse im hochfrequenten Teil zudem den vorgegebenen Pfad quer mit einer Korrektur überlagern kann.

Die Korrektur kann sich dabei aus der Analyse der dynamischen Verkehrssituation unter der Berücksichtigung des statischen Umfeldmodells aus dem niederfrequenten Teil, also z.B. Spurmarkierungen, ergeben, um so z.B. auf einen "Schlenker" des benachbarten Fahrzeugs auf der Nebenspur mit einer garantierten, maximalen Antwortzeit reagieren zu können.

Mit anderen Worten ausgedrückt, es wird in vorteilhafter Weise erreicht, dass eine Aufteilung in statisches Fahrzeugumfeld und dynamisches Fahrzeugumfeld bereitgestellt wird und der Einsatz einer erhöhten Vorausschau für das statische Umfeld vorgenommen wird, um diesen Teil so mit einem weich echtzeitfähigen System mit geringem ASIL-Level bzw. Anforderungen an die funktionale Sicherheit berechnen zu können.

Es erfolgt also beispielsweise eine Aufteilung in statisches Fahrzeugumfeld und dynamisches Fahrzeugumfeld bzw. auf ein weiches und ein hartes echtzeitfähiges System, d.h. es erfolgt eine hybride, d.h. zwei unterschiedliche Typen von echtzeitfähigen Systemen aufweisende, Berechnung für das Fahrerassistenzsystem.

Dies ermöglicht vorteilhaft, größere Vorausschauweiten und Sicherheitskonzepte mit redundanten Systemen bereitzustellen.

Höhere Vorausschauweite bedeutet dabei beispielsweise, dass eine Trajektorie für mehrere Sekunden, beispielsweise bis zu 10 s, im Voraus geplant und dann von der Regelung abgefahren wird.

Um diese Trajektorienplanung und das spätere Abfahren zu ermöglichen, sind viele Informationen über das statische Fahrzeugumfeldmodell vorhanden, z.B. die Verläufe von Fahrstreifen im Fahrzeugumfeld und erkannte Verkehrszeichen oder Ampeln mit einer Zuordnung zu den Fahrstreifen, für die sie gelten.

Um diese Informationen zuverlässig und robust aus einer Fusion von Umfeldsensorik und von Umfelddaten, beispielsweise aus einer Karte, zu erhalten sowie basierend auf dieser Karte eine Trajektorie zu planen, ist ein hoher algorithmischer Aufwand erforderlich.

Ein weiterer zweiter Aspekt der vorliegenden Erfindung betrifft ein Verfahren zur Umfeldmodellierung für ein Fahrerassistenzsystem für ein Kraftfahrzeug.

Das Verfahren umfasst folgende Verfahrensschritte:
Bereitstellen von einer Aufteilung eines zu berechnenden Gesamt-Fahrzeugumfeldmodells in ein statisches Fahrzeugumfeldmodell basierend auf einer ersten Vorrausschauweite und in ein dynamisches Fahrzeugumfeldmodell basierend auf einer zweiten Vorrausschauweite mit Hilfe von einer Separierungseinrichtung;
Berechnen des dynamischen Fahrzeugumfeldmodells basierend auf der ersten Vorrausschauweite innerhalb einer maximalen Antwortzeit mit Hilfe von einer ersten Echtzeitrechnereinrichtung;
Berechnen des statischen Fahrzeugumfeldmodells basierend auf der zweiten Vorrausschauweite innerhalb einer charakteristischen Antwortzeit mit Hilfe von einer zweiten Echtzeitrechnereinrichtung; und
Abändern der Aufteilung des zu berechnenden Gesamt-Fahrzeugumfeldmodells basierend auf einer Analyse des Gesamt-Fahrzeugumfeldmodells mittels einer Situationsanalyseeinrichtung.

Dabei kann das Verfahren ferner eine Aufteilung der Trajektorienplanung in einen nicht hart echtzeitfähigen Teil mit großer - beispielsweise 100 m oder 200 m - Vorausschauweite und einen hart echtzeitfähigen Teil durchführen.

Vorteilhafte Ausgestaltungen der vorliegenden Erfindung sind in den Unteransprüchen gekennzeichnet.

In einer vorteilhaften Ausführungsform der vorliegenden Erfindung ist vorgesehen, dass die Situationsanalyseeinrichtung dazu ausgebildet ist, die Aufteilung basierend auf einem Vergleich einer vorausberechneten Antwortzeit der ersten Echtzeitrechnereinrichtung mit einem Schwellenwert für die maximale Antwortzeit und/oder basierend auf einem Vergleich einer vorausberechneten Antwortzeit der zweiten Echtzeitrechnereinrichtung mit einem Schwellenwert für die charakteristische Antwortzeit abzuändern. Dies ermöglicht vorteilhaft, auf eintretende Belastungsspitzen zu reagieren und eine vorgegebene Antwortzeit einzuhalten.

Mit anderen Worten ausgedrückt, die Situationsanalyseeinrichtung ist beispielsweise dazu ausgebildet, die Aufteilung basierend auf einem Vergleich einer vorausberechneten ersten Antwortzeit der ersten Echtzeitrechnereinrichtung mit einem ersten Schwellenwert für die maximale Antwortzeit und/oder basierend auf einem Vergleich einer vorausberechneten zweiten Antwortzeit der zweiten Echtzeitrechnereinrichtung mit einem zweiten Schwellenwert für die charakteristische Antwortzeit abzuändern.

In einer weiteren vorteilhaften Ausführungsform der vorliegenden Erfindung ist vorgesehen, dass die erste Echtzeitrechnereinrichtung eine Mehrzahl von Regelungsblöcken aufweist und/oder dass die zweite Echtzeitrechnereinrichtung eine Mehrzahl von Regelungsblöcken aufweist. Dies ermöglicht vorteilhaft, einen modularen Aufbau der Vorrichtung zu verwirklichen.

In einer weiteren vorteilhaften Ausführungsform der vorliegenden Erfindung ist vorgesehen, dass die Mehrzahl der Regelungsblöcke der ersten Echtzeitrechnereinrichtung als Kette ausgebildet ist; und/oder wobei die Mehrzahl der Regelungsblöcke der zweiten Echtzeitrechnereinrichtung als Kette ausgebildet ist. Dies ermöglicht vorteilhaft einen modularen Aufbau der Vorrichtung zu verwirklichen.

In einer weiteren vorteilhaften Ausführungsform der vorliegenden Erfindung ist vorgesehen, dass die erste Echtzeitrechnereinrichtung dazu ausgebildet ist, das dynamische Fahrzeugumfeldmodell basierend auf der ersten Vorrausschauweite von bis zu 50 m oder von bis 100 m oder von bis zu 200 m innerhalb einer maximalen Antwortzeit von bis zu 3 s von bis zu 5 s oder von bis zu 10 s und mit einer Reichweite von bis zu 200 m oder von bis zu 500 m oder von bis zu 1000 m zu berechnen.

In einer weiteren vorteilhaften Ausführungsform der vorliegenden Erfindung ist vorgesehen, dass die erste Echtzeitrechnereinrichtung dazu ausgebildet ist, ein berechnetes Gesamt-Umfeldmodell und/oder eine berechnete Trajektorienplanung basierend auf dem dynamischen Fahrzeugumfeldmodell mit einem ersten Berechnungszyklus von bis zu 1 s oder von bis zu 2,5 s oder von bis zu 5 s auszugeben.

In einer weiteren vorteilhaften Ausführungsform der vorliegenden Erfindung ist vorgesehen, die zweite Echtzeitrechnereinrichtung dazu ausgebildet ist, ein berechnetes Gesamt-Umfeldmodell und/oder eine berechnete Trajektorienplanung basierend auf dem statischen Fahrzeugumfeldmodell mit einem zweiten Berechnungszyklus von bis zu 3 s oder von bis zu 6 s oder von bis zu 10 s auszugeben.

In einer weiteren vorteilhaften Ausführungsform der vorliegenden Erfindung ist vorgesehen, dass die erste Echtzeitrechnereinrichtung dazu ausgebildet ist, das dynamische Fahrzeugumfeldmodell mit einem ersten Integritätslevel zu berechnen, und wobei die zweite Echtzeitrechnereinrichtung dazu ausgebildet ist, das statische Fahrzeugumfeldmodell mit einem zweiten Integritätslevel zu berechnen.

Dies ermöglicht vorteilhaft, dass durch eine angepasste Aufteilung der Systemfunktionen auf unterschiedliche Integritätslevel sowie Einsetzen einer ausreichenden Vorausschau ein weich echtzeitfähiges System eingesetzt werden kann, zumindest für den Teil der Regelkette mit im Vergleich zum restlichen Teil geringeren Anforderungen an die funktionale Sicherheit.

In einer weiteren vorteilhaften Ausführungsform der vorliegenden Erfindung ist vorgesehen, dass erste Integritätslevel höher als das zweite Integritätslevel ist.

Die beschriebenen Ausgestaltungen und Weiterbildungen lassen sich beliebig miteinander kombinieren.

Weitere mögliche Ausgestaltungen, Weiterbildungen und Implementierungen der vorliegenden Erfindung umfassen auch nicht explizit genannte Kombinationen von zuvor oder im Folgenden bezüglich der Ausführungsformen beschriebenen Merkmale der vorliegenden Erfindung.

Die beiliegenden Zeichnungen sollen ein weiteres Verständnis der Ausführungsformen der vorliegenden Erfindung vermitteln. Die beiliegenden Zeichnungen veranschaulichen Ausführungsformen und dienen im Zusammenhang mit der Beschreibung der Erklärung von Konzepten der vorliegenden Erfindung.

Andere Ausführungsformen und viele der genannten Vorteile ergeben sich im Hinblick auf die Figuren der Zeichnungen. Die dargestellten Elemente der Figuren der Zeichnungen sind nicht notwendigerweise maßstabsgetreu zueinander gezeigt.

### Kurze Beschreibung der Figuren

Es zeigen:
- Fig. 1: eine schematische Darstellung einer Vorrichtung zur Umfeldmodellierung für ein Fahrerassistenzsystem für ein Kraftfahrzeug gemäß einem Ausführungsbeispiel der vorliegenden Erfindung;
- Fig. 2: eine schematische Darstellung einer Vorrichtung zur Umfeldmodellierung für ein Fahrerassistenzsystem für ein Kraftfahrzeug gemäß einem Ausführungsbeispiel der vorliegenden Erfindung; und
- Fig. 3: eine schematische Darstellung eines Flussdiagramms eines Verfahrens zur Umfeldmodellierung für ein Fahrerassistenzsystem für ein Kraftfahrzeug gemäß einem Ausführungsbeispiel der vorliegenden Erfindung.

### Detaillierte Beschreibung von Ausführungsbeispielen

In den Figuren der Zeichnungen bezeichnen gleiche Bezugszeichen gleiche oder funktionsgleiche Elemente, Bauteile, Komponenten oder Verfahrensschritte, soweit nichts Gegenteiliges angegeben ist.

Bei dem Kraftfahrzeug bzw. Fahrzeug handelt es sich beispielsweise um ein Kraftfahrzeug oder ein Hybridkraftfahrzeug, wie ein Motorrad, ein Auto, ein Bus oder ein Lastkraftwagen oder aber auch um ein Schienenfahrzeug, ein Schiff, ein Luftfahrzeug, wie Helikopter oder Flugzeug, oder beispielsweise um ein Fahrrad.

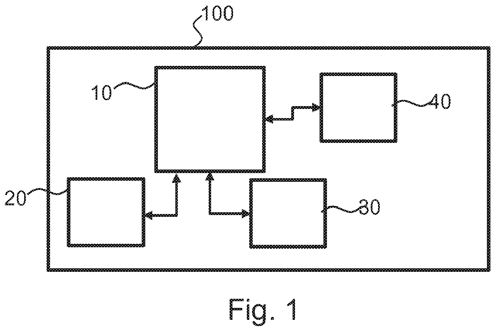

Die Fig. 1 zeigt eine schematische Darstellung einer Vorrichtung zur Umfeldmodellierung für ein Fahrerassistenzsystem für ein Kraftfahrzeug gemäß einem Ausführungsbeispiel der vorliegenden Erfindung.

Die Vorrichtung 100 zur Umfeldmodellierung für ein Fahrerassistenzsystem für ein Kraftfahrzeug umfasst eine Separierungseinrichtung 10, eine erste Echtzeitrechnereinrichtung 20, eine zweite Echtzeitrechnereinrichtung 30 und eine Situationsanalyseeinrichtung 40.

Die Separierungseinrichtung 10 ist dazu ausgebildet, eine Aufteilung eines zu berechnenden Gesamt-Fahrzeugumfeldmodells in ein statisches Fahrzeugumfeldmodell basierend auf einer ersten Vorrausschauweite und in ein dynamisches Fahrzeugumfeldmodell basierend auf einer zweiten Vorrausschauweite bereitzustellen.

Die erste Echtzeitrechnereinrichtung 20 ist dazu ausgebildet, das dynamische Fahrzeugumfeldmodell basierend auf der ersten Vorrausschauweite innerhalb einer maximalen Antwortzeit zu berechnen.

Die zweite Echtzeitrechnereinrichtung 30 ist dazu ausgebildet, das statische Fahrzeugumfeldmodell basierend auf der zweiten Vorrausschauweite mit einer charakteristischen Antwortzeit zu berechnen.

Die Situationsanalyseeinrichtung 40 ist dazu ausgebildet, die Aufteilung basierend auf einer Analyse des Gesamt-Fahrzeugumfeldmodells abzuändern.

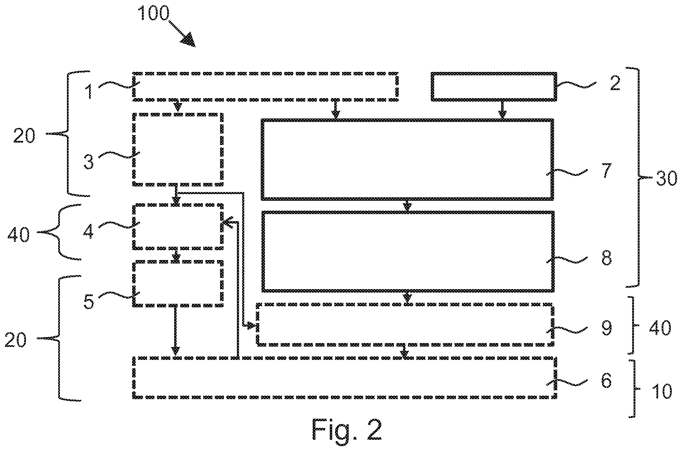

Die Figur 2 zeigt schematische Darstellung Vorrichtung zur Umfeldmodellierung für ein Fahrerassistenzsystem für ein Kraftfahrzeug gemäß einem Ausführungsbeispiel der vorliegenden Erfindung.

Die Figur 2 zeigt eine schematische Übersicht der Vorrichtung 1. Gestrichelt dargestellt sind Blöcke mit harten Echtzeitanforderungen, mit durchgehender Linie sind Blöcke mit weichen Echtzeitanforderungen dargestellt. Die Vorrichtung 1 kann als hybrides Berechnungssystem für ein Fahrerassistenzsystem bezeichnet werden, da zwei unterschiedliche Echtzeitrechnereinrichtungen verwendet werden.

Die Blöcke bzw. die Regelblöcke haben dabei beispielsweise folgenden Funktionen:
Eine Umfeldsensorik 1 kann Daten, beispielsweise Sensordaten, für ein zu berechnendes Gesamt-Fahrzeugumfeldmodells erfassen und bereitstellen.

Das zu berechnendes Gesamt-Fahrzeugumfeldmodell kann ein minimales Umfeldmodell 3 in einem schnellen Safety Pfad aufweisen.

Eine Situationsanalyseeinrichtung in Form von Block 4 kann dazu ausgebildet sein, die Aufteilung basierend auf einer Analyse des Gesamt-Fahrzeugumfeldmodells abzuändern.

Ein Regelungsblock in Form von Block 5 kann mit der Situationsanalyseeinrichtung 40 in Form von Block 4 gekoppelt sein, und dazu ausgebildet sein, einen Eingriff auf die Aufteilung des zu berechnenden Gesamt-Fahrzeugumfeldmodells in ein statisches Fahrzeugumfeldmodell und in ein dynamisches Fahrzeugumfeldmodell vorzunehmen.

Das heißt, die Situationsanalyseeinrichtung 40 kann dazu ausgebildet sein, zu berechnende Anteile wie auf die Echtzeitrechnereinrichtungen verteilt zu verschieben oder zu ändern, um eine maximale Antwortzeit mit dem harten Echtzeitsystem einzuhalten.

Mit anderen Worten ausgedrückt, anstelle von einem dem aufwändig zu berechnenden und umfassenden Ergebnis der nicht hart echtzeitfähigen zweiten Echtzeitrechnereinrichtung 30 wird ein berechenbares Ergebnis der nicht hart echtzeitfähigen zweiten Echtzeitrechnereinrichtung 30 oder ein gespeichertes Ergebnis der ersten Echtzeitrechnereinrichtung 20 verwendet.

Ein Überwachungsblock in Form von Block 6 kann diese Änderungen überwachen.

Ein Situationsanalyseblock 9 kann dazu ausgebildet sein, eine dynamische Regelung der Trajektorie mit einer erhöhten Vorrausschauweite bereitzustellen.

Die Funktionskette für ein heutiges ADAS-System, z.B. eine rein auf dynamischen Objekten basierende EBA-Funktion, würde von den Blöcken 1, 3, 4, 5, und 6 gebildet, die alle harte Echtzeitanforderungen erfüllen müssen und zu der ersten Echtzeitrechnereinrichtung 20 zugeordnet werden, da diese Berechnungen innerhalb einer maximalen Antwortzeit erfolgen müssen.

Dabei kann eine geänderte Kombination der Blöcke zum Einsatz kommen oder es kann ein Ausweichen auf statische Umfeldinformationen des zweiten Pfades bzw. der zweiten Kette erfolgen.

Für Funktionen mit hohem Automatisierungsgrad wird der Standardpfad von den Blöcken 1, 2, 7, 8, 9, 6 gebildet.

Von den Blöcken 1, 2, 7, 8 wird eine Trajektorie mit mehreren Sekunden zeitlicher Vorausschau bzw. mit mehreren 100 m räumlicher Vorausschau berechnet bzw. geplant.

Diese Trajektorie wird beispielsweise anschließend durch eine Regelung mit harten Echtzeitanforderungen in Form des Situationsanalyseblocks 9 abgefahren.

Ziel dieser Funktionskette ist es beispielsweise, eine komfortable Normalfahrfunktion bereit zu stellen. Es wird dabei beispielsweise davon ausgegangen, dass in den meisten Fällen eine komfortable Trajektorie sowohl längs als auch quer mit hoher Vorausschau, beispielsweise von bis zu 10 s oder bis zu 1000 m, geplant werden kann.

Dafür wird das Verhalten anderer Verkehrsteilnehmer beispielsweise prädiziert und eine Fahrzeugreaktion mit niedrigen Beschleunigungen, also großen Sicherheitsreserven, berechnet. Dieses Verhalten entspricht beispielsweise einem menschlichen Fahrer, der beispielsweise komfortorientiert und/oder ökonomisch fährt.

Die Blöcke 3 und 7 unterscheiden sich beispielsweise dabei im Umfang des Umfeldmodells. Das Umfeldmodell in Block 3 ist beispielsweise minimal gehalten und ermöglicht neben ADAS-Funktionen nur den Notbetrieb, während Block 7 mit großem Umfang und Vorausschauweite das volle Funktionssetup unterstützt, beispielsweise inklusive Spurwechseln.

Die vom Block 8 ausgegebene Trajektorie ist aufgrund der hohen Vorausschau in der Regel wenig zeitkritisch. Wird nun in diesem Regelblock 9 vorgesehen, dass insbesondere dynamische Objekte zusätzlich aus dem hart echtzeitfähigen Block 3 erhalten werden, lässt sich gegenüber nicht-hybriden Fahrerassistenzsystemen eine besondere Systemkonstellation erzielen:
Sowohl das Umfeldmodell 7 und die Trajektorienplanung 8 sind beispielsweise aufgrund der großen Vorausschau und aufgrund des vorwiegend statischen Inhalts in einem Block wie der Regelung 9 gut prädizierbar und daher weniger zeitkritisch als z.B. ein EBA-Eingriff.

Es kann beispielsweise sein, dass bei einer Vorausschau von 5 s die Trajektorie der Trajektorienplanung mit einem Zyklus von 1s ausgegeben wird, in dieser Konstellation wäre eine um 50 ms zu späte Ausgabe nicht relevant.

Die Aktualisierung für den Regler würde beispielsweise dann bei einer Vorausschau von nur noch 3950 ms statt 4000 ms kommen, womit ein ausreichender Sicherheitsabstand zu einem leer laufen der Eingangsdaten des Reglers erhalten wird.

In einer normalen Situation regelt beispielsweise Block 9 daher die erhaltene Trajektorie einfach ab. Um auf dynamische Situationen reagieren zu können, wie z.B. ein plötzlich vor einem bremsenden Fahrzeugs, enthält Block 9 zusätzlich eine Situationsanalyse für dynamische Objekte.

Da diese beispielsweise vom hart echtzeitfähigen Pfad über Block 3 bereitgestellt wird, ist jederzeit sicher gestellt, dass ausreichend schnell auf eine dynamische Änderung der Fahrsituation, wie beispielsweise bei einer Notbremsung oder bei einem plötzlichen Einscheren eines anderen Kraftfahrzeuges, reagiert werden kann.

Der Block 6 übernimmt beispielsweise die Überwachung des Systems und die Umschaltung auf den Notpfad, falls auf dem Hauptpfad eine Fehlfunktion oder ein unerwartetes Ereignis auftritt. Von Block 9 erhält Block 6 hierzu, neben den Regelgrößen, beispielsweise die aktuelle Länge der Trajektorie, auf der die Regelvorgabe basiert.

Wenn die Länge der Trajektorie einen ersten Schwellwert unterschreitet, z.B. 3,5 s, gibt der Überwacher eine Warnung aus. Diese kann z.B. den Fahrer über das HMI zur Übernahme auffordern. Wenn die Trajektorie einen zweiten Schwellwert unterschreitet, beispielsweise schaltet der Überwacherblock 6 nach einer Zeitspanne von 2 s auf den Sicherheitspfad um.

Der Sicherheitspfad über Block 4 und Block 5 kann beispielsweise - unter Umständen die gesamte Einsatzzeit - aktiv geschaltet sein, auch als "Hot Standby" bezeichnet. Ferner kann der Sicherheitspfad vom Überwacher in Form von Block 6 aktiviert, sobald die von Block 9 erhaltene Länge der Trajektorie einen Schwellwert unterschreitet, beispielsweise wird eine Schwellenwert von 3,5 s verwendet.

Es ergibt sich damit, dass die Blöcke 2, 7 und 8 auch mit einem System mit weichen Echtzeitanforderungen ausgeführt werden können, womit auch ein Betriebssystem, wie beispielsweise embedded Linux eingesetzt werden kann.

Dies bietet entsprechende Vorteile beim Entwicklungsaufwand und durch den großen zur Laufzeit zur Verfügung stehenden Funktionsumfang des Betriebssystems, wie z.B. Netzwerk- bzw. Kommunikationsstack, Dateisysteme zur persistenten Datenhaltung, Möglichkeit für automatische Updates.

Die Blöcke 2, 7 und 8 werden beispielsweise zu der zweiten Echtzeitrechnereinrichtung 30 zugeordnet, da diese Berechnungen der Blöcke 2, 7 und 8 lediglich mit einer charakteristischen Antwortzeit erfolgen müssen.

Die Anforderungen der funktionalen Sicherheit können für die weich echtzeitfähige Kette reduziert werden, indem die hart echtzeitfähige Kette 1, 3, 4, 5, 6 so ausgelegt wird, dass die Kette ein Auftreten von Unfällen unter Inkaufnahme einer eventuell unkomfortablen Regelung sicherstellt.

Die statischen Informationen des Umfeldmodells 7 können dabei der Situationsanalyse 4 zusätzlich zur Verfügung gestellt werden. Wenn das Umfeldmodell 7 ausfällt, stehen der Situationsanalyse 4 trotzdem noch Daten mit einer relativ hohen Vorausschauweite zur Verfügung.

Es könnte z.B. von der Vorrichtung 100 davon ausgegangen werden, dass bei mehr als beispielsweise 200 ms zu spät erhaltenen Daten das Umfeldmodell 7 ausgefallen ist. In diesem Fall würde der Notpfad der Kette 1, 3, 4, 5, 6 übernehmen.

Die verbliebene Vorausschauweite von beispielsweise 3800 ms wird dazu verwendet, die Fahrzeuggeschwindigkeit soweit zu reduzieren, dass auch mit der geringen Vorausschauweite des verbliebenen Pfades eine sichere Fahrzeugführung bis zur Fahrerübernahme bzw. bis zum Erreichen eines sicheren Zustandes möglich ist.

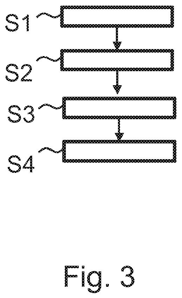

Die Fig. 3 zeigt eine schematische Darstellung eines Flussdiagramms eines Verfahrens zur Umfeldmodellierung für ein Fahrerassistenzsystem für ein Kraftfahrzeug gemäß einem Ausführungsbeispiel der vorliegenden Erfindung.

Verfahren zur Umfeldmodellierung für ein Fahrerassistenzsystem für ein Kraftfahrzeug, wobei das Verfahren folgende Verfahrensschritte umfasst:
Als ein erster Schritt des Verfahrens erfolgt ein Bereitstellen S1 von einer Aufteilung eines zu berechnenden Gesamt-Fahrzeugumfeldmodells in ein statisches Fahrzeugumfeldmodell basierend auf einer ersten Vorrausschauweite und in ein dynamisches Fahrzeugumfeldmodell basierend auf einer zweiten Vorrausschauweite mit Hilfe von einer Separierungseinrichtung 10.

Als ein zweiter Schritt des Verfahrens erfolgt ein Berechnen S2 des dynamischen Fahrzeugumfeldmodells basierend auf der ersten Vorrausschauweite innerhalb einer maximalen Antwortzeit mit Hilfe von einer ersten Echtzeitrechnereinrichtung 20.

Als ein dritter Schritt des Verfahrens erfolgt ein Berechnen S3 des statischen Fahrzeugumfeldmodells basierend auf der zweiten Vorrausschauweite innerhalb einer charakteristischen Antwortzeit mit Hilfe von einer zweiten Echtzeitrechnereinrichtung 30.

Als ein vierter Schritt des Verfahrens erfolgt ein Abändern S4 der Aufteilung des zu berechnenden Gesamt-Fahrzeugumfeldmodells basierend auf einer Analyse des Gesamt-Fahrzeugumfeldmodells mittels einer Situationsanalyseeinrichtung 40.

Obwohl die vorliegende Erfindung anhand bevorzugter Ausführungsbeispiele vorstehend beschrieben wurde, ist sie nicht darauf beschränkt, sondern auf vielfältige Art und Weise modifizierbar. Insbesondere lässt sich die vorliegende Erfindung in mannigfaltiger Weise verändern oder modifizieren, ohne vom Kern der Erfindung, wie in den Ansprüchen definiert, abzuweichen.

Ergänzend sei darauf hingewiesen, dass "umfassend" und "aufweisend" keine anderen Elemente oder Schritte ausschließt und "eine" oder "ein" keine Vielzahl ausschließt.

## Patentansprüche

1. Vorrichtung zur Umfeldmodellierung für ein Fahrerassistenzsystem für ein Kraftfahrzeug, wobei die Vorrichtung (100) umfasst:
- eine Separierungseinrichtung (10), welche dazu ausgebildet ist, eine Aufteilung eines zu berechnenden Gesamt-Fahrzeugumfeldmodells in ein statisches Fahrzeugumfeldmodell basierend auf einer ersten Vorrausschauweite und in ein dynamisches Fahrzeugumfeldmodell basierend auf einer zweiten Vorrausschauweite bereitzustellen; und
- eine erste Echtzeitrechnereinrichtung (20), welche dazu ausgebildet ist, das dynamische Fahrzeugumfeldmodell basierend auf der ersten Vorrausschauweite innerhalb einer maximalen Antwortzeit zu berechnen; und wobei
- eine Situationsanalyseeinrichtung (40) vorgesehen ist, welche dazu ausgebildet ist, die Aufteilung basierend auf einer Analyse des Gesamt-Fahrzeugumfeldmodells abzuändern,
**dadurch gekennzeichnet, dass**
- eine zweite Echtzeitrechnereinrichtung (30) vorgesehen ist, welche dazu ausgebildet ist, das statische Fahrzeugumfeldmodell basierend auf der zweiten Vorrausschauweite mit einer charakteristischen Antwortzeit zu berechnen.

2. Vorrichtung (100) nach Anspruch 1,
wobei die Situationsanalyseeinrichtung (40) dazu ausgebildet ist, die Aufteilung basierend auf einem Vergleich einer vorausberechneten ersten Antwortzeit der ersten Echtzeitrechnereinrichtung (20) mit einem ersten Schwellenwert für die maximale Antwortzeit und/oder basierend auf einem Vergleich einer vorausberechneten zweiten Antwortzeit der zweiten Echtzeitrechnereinrichtung (30) mit einem zweiten Schwellenwert für die charakteristische Antwortzeit abzuändern.

3. Vorrichtung (100) nach einem der vorhergehenden Ansprüche,
wobei die erste Echtzeitrechnereinrichtung (20) eine Mehrzahl von Regelungsblöcken aufweist; und/oder wobei die zweite Echtzeitrechnereinrichtung (30) eine Mehrzahl von Regelungsblöcken aufweist.

4. Vorrichtung (100) nach Anspruch 3,
wobei die Mehrzahl der Regelungsblöcke der ersten Echtzeitrechnereinrichtung (20) als Kette ausgebildet ist; und/oder wobei die Mehrzahl der Regelungsblöcke der zweiten Echtzeitrechnereinrichtung (30) als Kette ausgebildet ist

5. Vorrichtung (100) nach einem der vorhergehenden Ansprüche,
wobei die erste Echtzeitrechnereinrichtung (20) dazu ausgebildet ist, das dynamische Fahrzeugumfeldmodell basierend auf der ersten Vorrausschauweite von bis zu 50 m oder von bis 100 m oder von bis zu 200 m innerhalb einer maximalen Antwortzeit von bis zu 3 s von bis zu 5 s oder von bis zu 10 s zu berechnen.

6. Vorrichtung (100) nach einem der vorhergehenden Ansprüche,
wobei die erste Echtzeitrechnereinrichtung (20) dazu ausgebildet ist, ein berechnetes Gesamt-Umfeldmodell und/oder eine berechnete Trajektorienplanung basierend auf dem dynamischen Fahrzeugumfeldmodell mit einem ersten Berechnungszyklus von bis zu 1 s oder von bis zu 2,5 s oder von bis zu 5 s auszugeben.

7. Vorrichtung (100) nach einem der vorhergehenden Ansprüche,
wobei die zweite Echtzeitrechnereinrichtung (30) dazu ausgebildet ist, ein berechnetes Gesamt-Umfeldmodell und/oder eine berechnete Trajektorienplanung basierend auf dem statischen Fahrzeugumfeldmodell mit einem zweiten Berechnungszyklus von bis zu 3 s oder von bis zu 6 s oder von bis zu 10 s auszugeben und mit einer Reichweite von bis zu 200 m oder von bis zu 500 m oder von bis zu 1000 m.

8. Vorrichtung (100) nach einem der vorhergehenden Ansprüche,
wobei die erste Echtzeitrechnereinrichtung (20) dazu ausgebildet ist, das dynamische Fahrzeugumfeldmodell mit einem ersten Integritätslevel zu berechnen, und wobei die zweite Echtzeitrechnereinrichtung (30) dazu ausgebildet ist, das statische Fahrzeugumfeldmodell mit einem zweiten Integritätslevel zu berechnen.

9. Vorrichtung (100) nach Anspruch 8,
wobei das erste Integritätslevel höher als das zweite Integritätslevel ist.

10. Verfahren zur Umfeldmodellierung für ein Fahrerassistenzsystem für ein Kraftfahrzeug, wobei das Verfahren folgende Verfahrensschritte umfasst:
- Bereitstellen (S1) von einer Aufteilung eines zu berechnenden Gesamt-Fahrzeugumfeldmodells in ein statisches Fahrzeugumfeldmodell basierend auf einer ersten Vorrausschauweite und in ein dynamisches Fahrzeugumfeldmodell basierend auf einer zweiten Vorrausschauweite mit Hilfe von einer Separierungseinrichtung (10);
- Berechnen (S2) des dynamischen Fahrzeugumfeldmodells basierend auf der ersten Vorrausschauweite innerhalb einer maximalen Antwortzeit mit Hilfe von einer ersten Echtzeitrechnereinrichtung (20); und
- Berechnen (S3) des statischen Fahrzeugumfeldmodells basierend auf der zweiten Vorrausschauweite innerhalb einer charakteristischen Antwortzeit mit Hilfe von einer zweiten Echtzeitrechnereinrichtung (30); und
- Abändern (S4) der Aufteilung des zu berechnenden Gesamt-Fahrzeugumfeldmodells basierend auf einer Analyse des Gesamt-Fahrzeugumfeldmodells mittels einer Situationsanalyseeinrichtung (40).

## Claims

1. Surroundings modelling device for a driver assistance system for a motor vehicle, wherein the device (100) comprises:
- a separating device (10), which is designed to provide a division of an overall vehicle surroundings model to be calculated into a static vehicle surroundings model based on a first look-ahead distance and into a dynamic vehicle surroundings model based on a second look-ahead distance; and
- a first real-time computing device (20), which is designed to calculate the dynamic vehicle surroundings model based on the first look-ahead distance within a maximum response time; and wherein
- a situation analysis device (40) is provided, which is designed to modify the division based on an analysis of the overall vehicle surroundings model,
**characterized in that**
- a second real-time computing device (30) is provided, which is designed to calculate the static vehicle surroundings model based on the second look-ahead distance with a characteristic response time.

2. Device (100) according to Claim 1,
wherein the situation analysis device (40) is designed to modify the division based on a comparison of a predicted first response time of the first real-time computing device (20) with a first threshold value for the maximum response time and/or based on a comparison of a predicted second response time of the second real-time computing device (30) with a second threshold value for the characteristic response time.

3. Device (100) according to one of the preceding claims,
wherein the first real-time computing device (20) has a multiplicity of control blocks and/or wherein the second real-time computing device (30) has a multiplicity of control blocks.

4. Device (100) according to Claim 3,
wherein the multiplicity of control blocks of the first real-time computing device (20) is formed as a chain; and/or
wherein the multiplicity of control blocks of the second real-time computing device (30) is formed as a chain.

5. Device (100) according to one of the preceding claims,
wherein the first real-time computing device (20) is designed to calculate the dynamic vehicle surroundings model based on the first look-ahead distance of up to 50 m or of up to 100 m or of up to 200 m within a maximum response time of up to 3 s of up to 5 s or of up to 10 s.

6. Device (100) according to one of the preceding claims,
wherein the first real-time computing device (20) is designed to output a calculated overall surroundings model and/or a calculated trajectory plan based on the dynamic vehicle surroundings model with a first calculation cycle of up to 1 s or of up to 2.5 s or of up to 5 s.

7. Device (100) according to one of the preceding claims,
wherein the second real-time computing device (30) is designed to output a calculated overall surroundings model and/or a calculated trajectory plan based on the static vehicle surroundings model with a second calculation cycle of up to 3 s or of up to 6 s or of up to 10 s, and with a range of up to 200 m or of up to 500 m or of up to 1000 m.

8. Device (100) according to one of the preceding claims,
wherein the first real-time computing device (20) is designed to calculate the dynamic vehicle surroundings model with a first integrity level, and wherein the second real-time computing device (30) is designed to calculate the static vehicle surroundings model with a second integrity level.

9. Device (100) according to Claim 8,
wherein the first integrity level is higher than the second integrity level.

10. Surroundings modelling method for a vehicle assistance system for a motor vehicle, wherein the method comprises the following method steps:
- providing (S1) a division of an overall vehicle surroundings model to be calculated into a static vehicle surroundings model based on a first look-ahead distance and into a dynamic vehicle surroundings model based on a second look-ahead distance with the aid of a separating device (10);
- calculating (S2) the dynamic vehicle surroundings model based on the first look-ahead distance within a maximum response time with the aid of a first real-time computing device (20); and
- calculating (S3) the static vehicle surroundings model based on the second look-ahead distance within a characteristic response time with the aid of a second real-time computing device (30); and
- modifying (S4) the division of the overall vehicle surroundings model to be calculated based on an analysis of the overall vehicle surroundings model by means of a situation analysis device (40).

## Revendications

1. Dispositif de modélisation d'environnement destiné à un système d'aide à la conduite d'un véhicule automobile, le dispositif (100) comprenant :
- un moyen de séparation (10) qui est conçu pour réaliser une division d'un modèle d'environnement de véhicule complet à calculer en un modèle d'environnement de véhicule statique basé sur une première amplitude d'anticipation et en un modèle d'environnement de véhicule dynamique basé sur une deuxième amplitude d'anticipation ; et
- un premier moyen de calcul en temps réel (20) qui est conçu pour calculer le modèle d'environnement de véhicule dynamique sur la base de la première amplitude d'anticipation en un temps de réponse maximal ; et
- un moyen d'analyse de situation (40) étant prévu qui est conçu pour modifier la division sur la base d'une analyse du modèle d'environnement de véhicule complet,
**caractérisé en ce que**
- un deuxième moyen de calcul en temps réel (30) est prévu qui est conçu pour calculer le modèle d'environnement de véhicule statique sur la base de la deuxième amplitude d'anticipation avec un temps de réponse caractéristique.

2. Dispositif (100) selon la revendication 1,
le moyen d'analyseur de situation (40) étant conçu pour modifier la division sur la base d'une comparaison d'un premier temps de réponse, calculé à l'avance, du premier moyen de calcul en temps réel (20) avec un premier seuil de temps de réponse maximum et/ou sur la base d'une comparaison d'un deuxième temps de réponse, calculé à l'avance, du deuxième moyen de calcul en temps réel (30) avec un deuxième seuil de temps de réponse caractéristique.

3. Dispositif (100) selon l'une des revendications précédentes,
le premier moyen de calcul en temps réel (20) comportant une pluralité de blocs de régulation ; et/ou le deuxième moyen de calcul en temps réel (30) comportant une pluralité de blocs de régulation.

4. Dispositif (100) selon la revendication 3,
la pluralité de blocs de régulation du premier moyen de calcul en temps réel (20) étant conçue comme une chaîne ; et/ou la pluralité de blocs de régulation du deuxième moyen de calcul en temps réel (30) étant conçue comme une chaîne.

5. Dispositif (100) selon l'une des revendications précédentes,
le premier moyen de calcul en temps réel (20) étant conçu pour calculer le modèle d'environnement de véhicule dynamique sur la base de la première amplitude d'anticipation allant jusqu'à 50 m ou jusqu'à 100 m ou jusqu'à 200 m avec un temps de réponse maximal pouvant atteindre de 3 s, 5 s ou 10 s.

6. Dispositif (100) selon l'une des revendications précédentes,
le premier moyen de calcul en temps réel (20) étant conçu pour délivrer un modèle d'environnement complet calculé et/ou une planification de trajectoire calculée sur la base du modèle d'environnement de véhicule dynamique avec un premier cycle de calcul allant jusqu'à 1 s, 2,5 s ou 5 s.

7. Dispositif (100) selon l'une des revendications précédentes,
le deuxième moyen de calcul en temps réel (30) étant conçu pour réaliser un modèle d'environnement complet calculé et/ou une planification de trajectoire calculée sur la base du modèle d'environnement de véhicule statique avec un deuxième cycle de calcul allant jusqu'à 3 s ou 6 s ou 10 s, et avec une portée allant jusqu'à 200 m, 500 m et 1000 m.

8. Dispositif (100) selon l'une des revendications précédentes,
le premier moyen de calcul en temps réel (20) étant conçu pour calculer le modèle d'environnement de véhicule dynamique avec un premier niveau d'intégrité, et le deuxième moyen de calcul en temps réel (30) étant conçu pour calculer le modèle d'environnement de véhicule statique avec un deuxième niveau d'intégrité.

9. Dispositif (100) selon la revendication 8,
le premier niveau d'intégrité étant supérieur au deuxième niveau d'intégrité.

10. Procédé de modélisation d'environnement d'un système d'assistance à la conduite de véhicule automobile, le procédé comprenant les étapes suivantes :
- réaliser (S1) une division d'un modèle d'environnement de véhicule complet à calculer en un modèle d'environnement de véhicule statique basé sur une première amplitude d'anticipation et en un modèle d'environnement de véhicule dynamique basé sur une deuxième amplitude d'anticipation à l'aide d'un moyen de séparation (10) ;
- calculer (S2) le modèle d'environnement de véhicule dynamique sur la base de la première amplitude d'anticipation en un temps de réponse maximal à l'aide d'un premier moyen de calcul en temps réel (20) ; et
- calculer (S3) le modèle d'environnement de véhicule statique sur la base de la deuxième amplitude d'anticipation en un temps de réponse caractéristique à l'aide d'un deuxième moyen de calcul en temps réel (30) ; et
- modifier (S4) la division du modèle d'environnement de véhicule complet à calculer sur la base d'une analyse du modèle d'environnement de véhicule complet à l'aide d'un moyen d'analyse de situation (40).
